**Europäisches Patentamt**

**European Patent Office**

**Office européen des brevets**

(19)

(11) Veröffentlichungsnummer : **0 355 333 B1**

(12) # EUROPÄISCHE PATENTSCHRIFT

(45) Veröffentlichungstag der Patentschrift :
**09.09.92 Patentblatt 92/37**

(51) Int. Cl.$^5$ : **H02M 3/156**

(21) Anmeldenummer : **89112029.7**

(22) Anmeldetag : **01.07.89**

(54) **Verfahren zum Betreiben eines Schaltreglers.**

(30) Priorität : **25.08.88 DE 3828816**

(43) Veröffentlichungstag der Anmeldung :
**28.02.90 Patentblatt 90/09**

(45) Bekanntmachung des Hinweises auf die
Patenterteilung :
**09.09.92 Patentblatt 92/37**

(84) Benannte Vertragsstaaten :
**DE FR GB IT NL**

(56) Entgegenhaltungen :
**WO-A-89/03609**
**DE-A- 2 739 387**
**DE-A- 3 609 731**

(56) Entgegenhaltungen :
**FR-A- 2 456 970**
**IEEE TRANSACTIONS ON POWER ELECTRO-**
**NICS, Band PE-1, Nr. 3, Juli 1986,Seiten**
**181-192, R. REDL & N. SOKAL:**
**"Near-OptimumDynamic Regulation of DC-DC**
**Converters Using Feed-Forward of Output**
**Current and Input Voltage with Current-Mode**
**Control"**

(73) Patentinhaber : **ANT Nachrichtentechnik**
**GmbH**
**Gerberstrasse 33**
**W-7150 Backnang (DE)**

(72) Erfinder : **Ohms, Franz, Dipl.-Ing.**
**Reuteweg 14**
**W-7163 Oberrot-Hausen (DE)**

EP 0 355 333 B1

## Beschreibung

Die Erfindung geht aus von einem Schaltregler, dessen Pulsbreitenmodulator ein aus der Ausgangsspannung abgeleitetes Fehlersignal sowie die Summe aus einem zum Strom durch das Stellglied proportionalen Signal und einem sägezahnförmigen Signal konstanter Amplitude zugeführt ist.

Ein solcher Schaltregler ist bekannt aus DE 29 20 166 C2. Die kombinierte Steuerung des Stellgliedes in Abhängigkeit eines sägezahnförmigen Signals und eines schalterstromproportionalen Signals führt zu einem Schaltregler hoher Stabilität, insbesondere gegen Schwingneigung, auch in den Fällen, wo das Tastverhältnis (Schalterleitezeit zu Auszeit) mehr als die halbe Periodendauer der Schaltfrequenz beträgt.

Aufgabe der Erfindung ist es, das Verfahren, ausgehend vom Schaltregler gemäß DE 29 20 166 C2, so weiterzubilden, daß Störsignale auf der Eingangsspannung in ihrer Auswirkung auf die Ausgangsspannung des Schaltreglers optimal unterdrückt werden, ohne daß eine Beeinträchtigung der Regelgeschwindigkeit z.B. bei Lastsprüngen, auftritt. Diese Aufgabe wir durch die Schritte des Patentanspruchs 1 gelöst. Anspruch 2 zeigt ein Verfahren zum Betreiben eines modifizierten Schaltreglers auf und die weiteren Ansprüche beinhalten vorteilhafte Ausgestaltungen.

Es ist zwar an sich bekannt, das Tastverhältnis in Abhängigkeit von der Eingangsspannung eines Schaltreglers zu ändern (oft als Vorwärtssteuerung bezeichnet), indem man die Amplitude eines sägezahnförmigen Signals in Abhängigkeit der Höhe der Eingangsspannung ändert (D. Macek: Schaltnetzteile · Motorsteuerungen, Dr. Alfred Hüthig Verlag, Heidelberg 1982, Seiten 101-102); jedoch ergibt sich hieraus keine Anregung wie ein Schaltregler zu betreiben ist, um auch andere Störspannungen z.B. bei Lastsprüngen optimal zu unterdrücken. Aus der DE 36 09 731 A1 ist es bei einem Schaltregler bekannt, Störspannungen auf der Einganspannung dadurch auszuregeln, daß die Amplitude eines Sägezahngenerators, der den Pulsbreitenmodulator des Schaltreglers steuert, in reziproker Abhängigkeit von der Eingangspannung geändert wird. Diese Maßnahme führt jedoch nicht dazu, daß die Regelgeschwindigkeit eines zweiten Regelkreises, der ebenfalls auf den Pulsbreitenmodulator wirkt, erhöht wird. Beim Schaltregler gemäß DE 36 09 731 A1 wird ebenfalls ein Fehlersignal aus der Ausgangsspannung abgeleitet und vom Pulsbreitenmodulator verarbeitet. Ein Boostregler in der Grundschaltung des Anspruches 2 ist auf DE-27 39 387 A1 bekannt, bei dem die Gegentaktschalter abwechslungsweise von einem Taktgeber ein- und ausgeschaltet werden, wobei das Tastverhältnis abhängig ist von einer am Taktgeber anliegenden Steuerspannung. Regelungsmöglichkeiten werden dort allerdings nicht aufgezeigt.

Aus dem Buch "Schaltnetzteile" von J. Wüstehube, Expert Verlag, 7031 Grafenau, ist es bekannt, das Tastverhältnis für Schaltregler-Stellglieder in Abhängigkeit der Eingangsspannung zu verändern, dadurch daß dem Pulsbreitenmodulator des Schaltreglers ein Sägezahnsignal zugeführt wird, dessen Amplitude abhängig von der Eingangsspannung ist.

Aus IEEE Transactions on Power Electronics, Vol. PE-1, No. 3, July 1986, Seiten 181 - 191 sind die grundsätzlichen Möglichkeiten einer Vorwärtssteuerung entweder des Ausgangsstromes oder der Eingangsspannung aufgezeigt.

Die Erfindung bietet folgende Vorteile:
Wechselanteile auf der Eingangsspannung des Schaltreglers, insbesondere CS (conducted suszeptibility)-Störungen, werden stark gedämpft. Dadurch kann der Siebmittelaufwand im Lastkreis des Schaltreglers sehr klein gehalten werden. Stabilitätsprobleme treten nicht auf. Die Eingangspannungsunterdrückung ist bei zahlreichen Schaltregler-Typen anwendbar. Durch das erfindungsgemäße Betreiben des Schaltreglers ist der arithmetische Mittelwert des Stromes durch die Induktivität des Schaltreglers unabhängig von der Eingangsspannung und damit auch unabhängig von Wechselanteilen auf der Eingangsgleichspannung. Durch das Verfahren nach der Erfindung müssen im zweiten Regelkreis des Pulsbreitenmodulators (Ausgangsspannungsauswertung) keine hohen Sprungsignale ausgeregelt werden, was insgesamt zu einer höheren Regelgeschwindigkeit des Schaltreglers führt.

Anhand der Zeichnungen wird die Erfindung nun näher erläutert. Es zeigen

Fig. 1 ein Prinzipschaltbild eines Buckreglers, der nach dem Verfahren der Erfindung betrieben wird,

Fig. 2 ein Prinzipschaltbild eines modifizierten Boostreglers, der nach dem Verfahren der Erfindung betrieben wird,

Fig. 3 die Erzeugung der Sägezahnsignale für den Buckregler gemäß Fig. 1 und

Fig. 4 eine Alternative zur Stromerfassung.

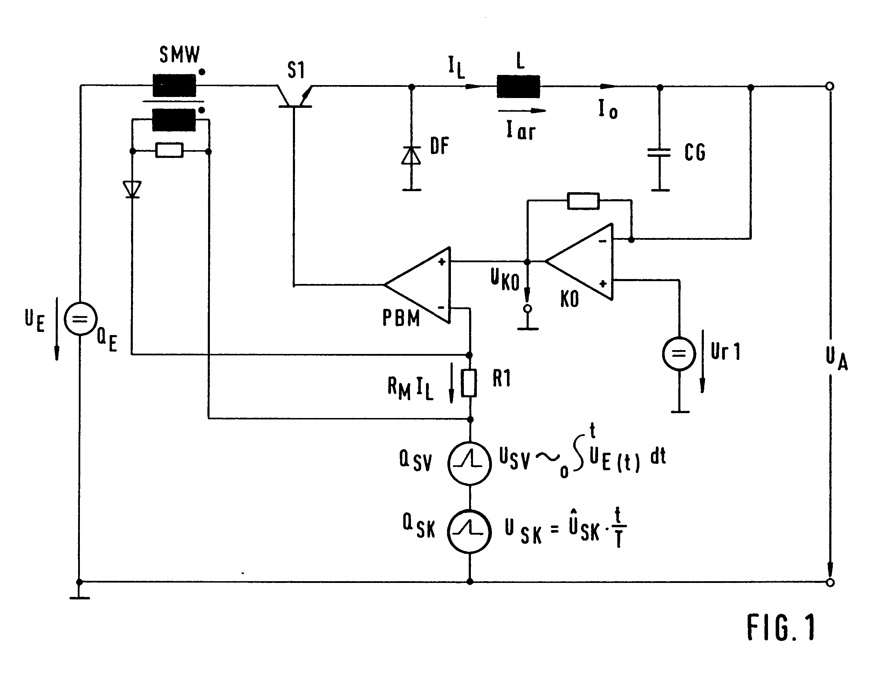

Der Buck-(Abwärts-)regler gemäß Fig. 1 weist eine Eingangsgleichspannungsquelle $Q_E$ auf mit einer Klemmenspannung $U_E$. Zwischen dem Pluspol der Eingangsgleichspannungsquelle $Q_E$ und dem Pluspol des Schaltreglerausganges mit der Ausgangsspannung $U_A$ liegt die Serienschaltung des elektronischen Schalters S1 in Form eines Schalttransistors und der Schaltreglerinduktivität L. Die Freilaufdiode des Schaltreglers ist mit DF bezeichnet und der ausgangsseitige Glättungskondensator mit CG. Die Ausgangsspannung $U_A$ wird einem Komparator K0 zugeführt, der diese mit einer Referenzspannung Ur1 vergleicht. Übersteigt die Ausgangsspan-

---

nung $U_A$ diese Referenzgleichspannung Ur1, so wird an den Pulsbreitenmodulator PBM (nichtinvertierender Eingang) dessen Ausgangssignal das Tastverhältnis (Einschalt- zu Ausschaltdauer) des elektronischen Schalters S1 bestimmt, ein Steuersignal abgegeben. An den invertierenden Eingang des Pulsbreitenmodulators PBM und gemeinsamer Masse ist die Serienschaltung aus einem Widerstand R1 und zwei Signalquellen $Q_{SV}$, $Q_{SK}$ angeschlossen, die sägezahnförmige Signale $U_{SV}$ und $U_{SK}$ liefern. Am Widerstand R1 fällt eine zum Eingangsstrom des Schaltreglers proportionale Spannung ab. Dies wird dadurch erreicht, daß der Widerstand R1 von dem gleichgerichteten Sekundärstrom eines Stromwandlers SMW durchflossen wird, dessen Primärwicklung sich im Schaltregler-Eingangsstromkreis zwischen Eingangsgleichspannungsquelle $Q_E$ und dem elektronischen Schalter S1 befindet. Die Signalquelle $Q_{SK}$ führt eine Sägezahnspannung

$$U_{SK(t)} = \hat{U}_{SK} \cdot t/T,$$

wobei

t die Zeit,

T die Periodendauer der Sägezahnwiederholfrequenz und

$\hat{U}_{SK}$ die Maximalamplitude der Sägezahnspannung angibt. Die Maximalamplitude $\hat{U}_{SK}$ der Sägezahnspannung wird konstant gehalten.

Für die gesamte Sägezahnspannung

$$U_{SG(t)} = U_{SK(t)} + U_{SV(t)}$$

muß aus Stabilitätsgründen gelten:

$$U_{SG} > \frac{(2U_A - U_E) R_M \cdot T}{L}$$

RM bezeichnet den Widerstandswert des Widerstandes zur Erfassung des Stromes durch das Stellglied, bzw. in dem in Fig. 1 gezeigten Fall der Stromerfassung mit einem Stromwandler den mit dem Kehrwert des Übersetzungsverhältnisses des Stromwandlers SMW multiplizierten Widerstandswert. Es gilt dann RM $= \dfrac{R1}{\ddot{u}l}$, wobei ü das Übersetzungsverhältnis des Stromwandlers SMW angibt. Um die Stabilitätsbedingung einhalten zu können, ist also eine bestimmte Minimum-Sägezahnamplitude nötig, die allein durch die Regelung in Abhängigkeit der Ausgangsspannung $U_A$ nicht bereitgestellt werden kann. Die Wirkung der Stromsteueramplitude läßt sich dadurch verändern, indem man die Sägezahnamplitude durch die Eingangsspannung moduliert. Dazu ist eine weitere Signalquelle $Q_{SV}$ vorgesehen, die die Sägezahnspannung:

$$U_{SV(t)} = \frac{1}{RC} \int_0^t U_{E(t)} dt$$

führt. Diese Sägezahnspannung $U_{SV(t)}$ ist somit proportional zur aufintegrierten Eingangsspannung $U_{E(t)}$. Die Zeitabhängigkeit der Eingangsspannung $U_E$ des Schaltreglers rührt im wesentlichen von überlagerten Wechselanteilen, wie z.B. bei einem Schaltnetzteil eine 100 Hz Brummspannung. Eine optimale Unterdrückung dieser Störungen liegt vor, wenn der arithmetische Mittelwert des Stromes $I_0$ durch die Induktivität L konstant ist. Zur optimalen Unterdrückung von Eingangsspannungsänderungen und Einhaltung der Stabilitätsforderung müssen Bedingungen eingehalten werden, die sich aus folgenden Ansätzen ergeben.

Der arithmetische Mittelwert des Stromes durch die Induktivität ergibt sich zu:

$$I_{ar(D)} = I_0 + \frac{U_E - U_A}{2L} \cdot D \cdot T,$$

wobei D (dutycycle) die Einschaltzeit im Verhältnis zur Periodendauer T angibt. Mit

$$I_0 = \frac{U_{KO}}{R_M} - D \left[ \frac{U_E - U_A}{L} \cdot T + \frac{\hat{U}_{SG}}{R_M} \right],$$

wobei $U_{KO}$ Spannung am positiven Eingang des Pulsbreitenmodulators PBM darstellt, und

3

$$\hat{U}_{SG} = K_A \cdot U_A + K_E \cdot U_E \text{ folgt:}$$

$$I_{ar} = \frac{U_{K0}}{R_M} - \left( \frac{T}{2L} + \frac{K_E}{R_M} \right) \cdot U_A - \left( \frac{K_A}{R_M} - \frac{T}{2L} \right) U_A{}^2 \cdot \frac{1}{U_E} \cdot$$

Wenn $K_A = \dfrac{R_M \cdot T}{2L}$ gewählt

wird, ist der arithmetische Mittelwert $I_{ar}$ unabhängig von der Eingangsspannung $U_E$ und somit auch unabhängig von Störungen auf der Eingangsspannung $U_E$.

$K_E$ wird nun so gewählt, daß die Stabilitätsbedingung

$$\hat{U}_{SG} = \frac{U_{Emin} \cdot R_M \cdot T}{L} \text{ erfüllt ist.}$$

Für die Eingangsspannung des Pulsbreitenmodulators PBM gilt:

$$U_- = K_I \cdot I_{L(t)} + \hat{U}_{SK} \cdot t / T + \frac{\int_0^t U_{E(t)} dt}{RC} \cdot$$

wobei $K_I$ der Proportionalitätsfaktor zwischen dem Strom durch den Widerstand R1 und dem Strom durch die Primärwicklung des Stromwandlers SMW ist.

$$\text{Mit } I_{L(t)} = I_{L(t=0)} + \frac{\int_0^t (U_{E(t)} - U_A) dt}{L}$$

ergibt sich:

$$U_- = K_I \cdot I_{L(t=0)} + \frac{1}{T} \left[ \frac{K_I \cdot T}{L} \int_0^t U_{E(t)} dt + \frac{T}{RC} \int_0^t U_{E(t)} dt \right.$$
$$\left. + \hat{U}_{SK} \cdot t - \frac{K_I U_A \cdot T}{L} \cdot t \right] \cdot$$

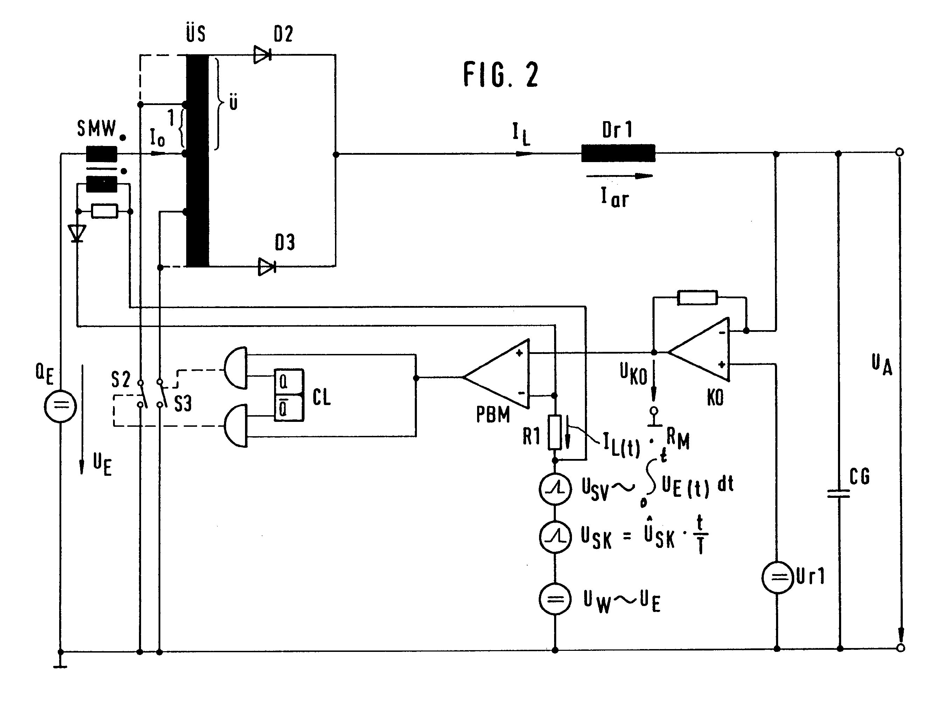

In Fig. 2 ist ein modifizierter Boostregler dargestellt, der so betrieben wird, daß der arithmetische Mittelwert des Stromes durch seine Drossel Dr1 konstant ist. Dieser Schaltreglertyp weist einen Sparübertrager ÜS mit dem Übersetzungsverhältnis ü auf. Der Wicklungsmittelpunkt dieses Sparübertragers ist mit dem Pluspol der Eingangsgleichspannungsquelle $Q_E$, die die Spannung $U_E$ führt, verbunden. Die Wicklungsenden des Sparübertragers ÜS sind über je eine gleichsinnig gepolte Diode D2 und D3 mit einem Anschlußende der Drossel Dr1 verbunden. Das andere Ende der Drossel Dr1 bildet die eine Ausgangsklemme des Schaltreglers. Die andere Ausgangsklemme ist mit dem Minuspol der Eingangsgleichspannungsquelle $Q_E$ verbunden. Die Ausgangsspannung $U_A$ dieses Schaltreglers ist zwischen den Ausgangsklemmen verfügbar. Zwischen symmetrisch zum Wicklungsmittelpunkt gelegenen Anzapfungen des Sparübertragers ÜS und dem Minuspol ist ein Paar von im Gegentakt arbeitenden elektronischen Schaltern S2 und S3 als Stellglied angeordnet, die über den Pulsbreitenmodulator PBM und eine übliche Pulsaufteilstufe für Gegentaktsignale - bestehend aus zwei UND-Gattern und einem Gegentakt-Flip-Flop (z.B. als Teil der integrierten Schaltung TDA 4700) - ihre Einschaltpulse erhalten. Alternativ kann das Paar S2 und S3 auch an die Wicklungsenden des Sparübertragers ÜS angeschlossen werden (gestrichelt). Die Ausgangsspannung $U_A$ wird wie beim Schaltregler gemäß Fig. 1 über den Komparator K0 ausgewertet und dem Pulsbreitenmodulator PBM am nichtinvertierenden Eingang zugeführt. Die Reglerübertragungsfunktion ist gegeben durch:

$$U_A = U_E + ü \cdot U_E \cdot \frac{t_{ein}}{T}.$$

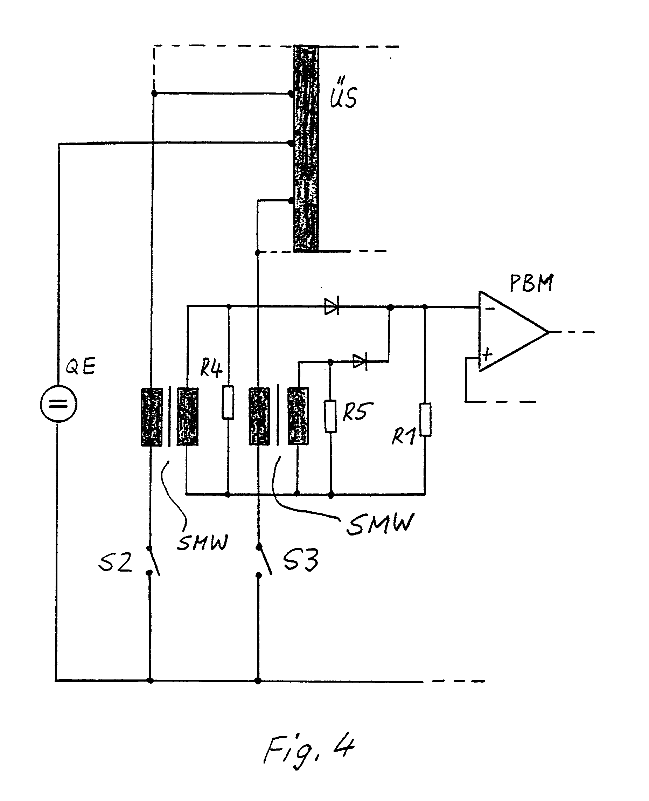

Am invertierenden Eingang des Pulsbreitenmodulators PBM wird ebenfalls ein zum Drosselstrom $I_L$ des Schaltreglers proportionale Spannung - Spannungsabfall am Widerstand R1 durch Stromerfassung mittels Strommeßwandler SMW -zugeführt. Im Ausführungsbeispiel gemäß Fig. 2 liegt die Primärwicklung des Strommeßwandlers SMW zwischen der Eingangsgleichspannungsquelle $Q_E$ und dem Mittelabgriff des Sparübertragers ÜS. Dieser Strommeßwandler SMW kann alternativ hierzu auch in den Strompfad der Schalter S2 und S3 liegen. Dieser Stromwandler weist dann zwei Primärwicklungen auf mit jeweils einer Primärwicklung in einem Schalterstrompfad. Alternativ hierzu kann auch pro Schalterstrompfad ein separater Strommeßwandler vorgesehen werden. Die Sekundärwicklungen dieser beiden Strommeßwandler werden jeweils über Gleichrichterschaltungen am Widerstand R1 parallel geschaltet (Fig. 4). Letztere Realisierung hat den Vorteil, daß Unsymmetrien in den Schaltzeiten der Schalter S2 und S3 nicht zu Meßverfälschungen für den mittels Widerstand R1 erfaßten Strom führen. Die Widerstände R4 und R5 der Gleichrichterschaltung werden so hochohmig bemessen, daß der jeweilige nicht stromdurchflossene Stromwandler schnell und vollständig entmagnetisierbar ist. Auch liegt zu dieser stromproportionalen Spannung eine Sägezahnspannung $U_{SK} = \hat{U}_{SK} \cdot t / T$ konstanter Maximal-Amplitude und eine zusätzliche Sägezahnspannung $U_{SV}$, die proportional zur aufintegrierten Eingangsspannung $U_{E(t)}$ ist, in Serie. Jedoch abweichend zu Fig. 1 liegt nun eine Gleichspannung $U_W$, deren Höhe proportional zur Eingangsspannung $U_E$ ist, in Serie.

Für die Sägezahnspannung $U_{SK}$ muß hier aus Stabilitätsgründen gelten:

$$U_{SK} > \left[ 2\,U_A - (ü+2)\,U_{Emin} \right] \frac{R_M \cdot T}{L} = \frac{R_M \cdot T \cdot U_A}{L} \cdot \frac{ü}{ü+1}$$

$$\text{für } U_{Emin} = \frac{U_A}{1+ü}.$$

Der Widerstand $R_M$ ist ein fiktiver Widerstand, der multipliziert mit dem Drosselstrom $I_{L(t)}$ die stromanteilige Spannung am Komparator K0 ergibt. Hier ist

$$RM = \frac{R1(ü+1)}{üII},$$

wobei üII das Übersetzungsverhältnis des Stromwandlers SMW ist.

Damit der arithmetische Mittelwert $I_{ar}$ des Stromes durch die Schaltreglerdrossel Dr1 hier unabhängig von der Eingangsspannung $U_E$ wird, müssen die folgenden Bedingungen gelten:

Der Proportionalitätsfaktor K zwischen der Gleichspannung $U_W$ und der Eingangsspannung $U_E$ muß

$$K = \frac{T\,(1+ü) \cdot R_M}{2\,L \cdot ü} \text{ werden.}$$

Für die Amplitude $\hat{U}_{SK}$ der Konstant-Sägezahnspannung ist die Bedingung

$$\hat{U}_{SK} = \frac{T \cdot R_M}{2L \cdot ü} \cdot U_A \text{ einzuhalten.}$$

Des weiteren muß für den eingangsspannungsabhängigen Sägezahnanteil

$$K_E \cdot U_{Emin} = \frac{R_M \cdot T \cdot U_A}{L} \cdot \frac{ü}{ü+1} - \frac{R_M \cdot T \cdot U_A}{2L}$$

gelten.

Für den arithmetischen Mittelwert des Stromes gilt dann:

EP 0 355 333 B1

$$I_{ar} = U_{K0} \cdot \frac{1}{R_M} + \frac{\hat{U}_{SK}}{R_M \cdot \ddot{u}} - \frac{T \cdot (\ddot{u}+2)}{2L \cdot \ddot{u}} \cdot U_A - \frac{U_A \cdot K_E}{R_M \cdot \ddot{u}}$$

$$\Rightarrow I_{ar} \neq f(U_E) ,$$

wobei $U_{K0}$, die Spannung am positiven Eingang des Pulsbreitenmodulators PBM darstellt.

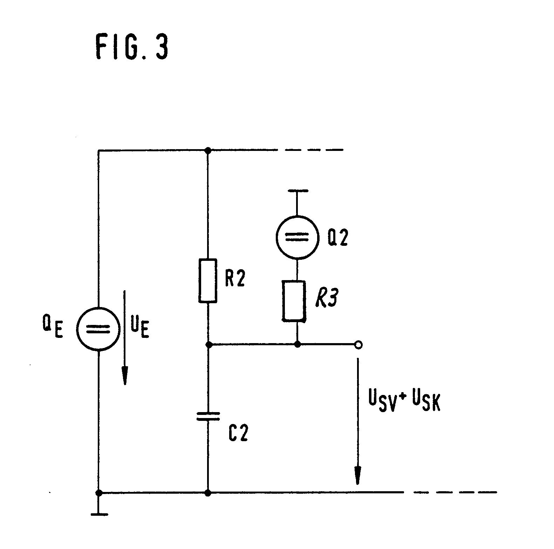

Für den in Fig. 1 vorgestellten Buckregler lassen sich die beiden sägezahnförmigen Signale durch die Schaltung gemäß Fig. 3 einfach ableiten. Dazu ist der Eingangsgleichspannungsquelle $Q_E$ eine Serienschaltung aus einem RC-Glied - Widerstand R2, Kondensator C2 - parallel geschaltet. Der gemeinsame Verbindungspunkt des Widerstandes R2 und des Kondensators C2 ist über einen Widerstand R3 mit einer Referenzgleichspannungsquelle Q2 verbunden. An diesem Verbindungspunkt des RC-Gliedes ist die Spannung $U_{SV} + U_{SK}$ abgreifbar, die zusammen mit dem stromproportionalen Signal am Widerstand R1 dem invertierenden Eingang des Pulsbreitenmodulators PBM zugeführt wird. Der Kondensator C2 integriert hier die Eingangsgleichspannung $U_E$.


**Patentansprüche**

1. Verfahren zum Betreiben eines Schaltreglers, dessen Stellglied (S1) über einen Pulsbreitenmodulator (PMB) gesteuert wird, wobei diesem Pulsbreitenmodulator zur Bildung eines Vergleichssignals einerseits ein Fehlersignal ($U_{KO}$), welches von der Ausgangsspannung ($U_A$) abgeleitet ist, und andererseits die Summe folgender Signale zugeführt wird:
   Ein sägezahnförmiges Signal ($U_{SK}$) konstanter Amplitude, ein zum Strom ($I_O$) durch das Stellglied (S1) proportionales Signal, ein weiteres sägezahnförmiges Signal ($U_{SV}$), dessen Spitzen-Amplitude proportional zur aufintegrierten Eingangsspannung ($U_E$) gewählt wird, wobei der Vergleich derart vorgenommen wird, daß der arithmetische Mittelwert des Stromes durch die Induktivität des Schaltreglers konstant bleibt.

2. Verfahren zum Betreiben eines als modifizierter Boostregler ausgebildeten Schaltreglers, der einen Sparübertrager (ÜS) mit symmetrischen Wicklungen aufweist, wobei der Wicklungsmittelpunkt dieses Sparübertragers an einen Pol einer Eingangsgleichspannungsquelle ($Q_E$) geführt ist und die Wicklungsenden über je eine gleichsinnig gepolte Diode (D2, D3) mit einem Anschlußende einer Drossel (Dr1) verbunden sind, wobei das andere Ende dieser Drossel an eine Ausgangsklemme des Schaltreglers angeschlossen ist und wobei zwei im Gegentakt arbeitende Schalter (S2, S3) als Stellglied vorgesehen sind, deren eines Anschlußendenpaar sowohl mit dem anderen Pol der Eingangsgleichspannungsquelle ($Q_E$) als auch mit der drosselfernen Ausgangsklemme des Schaltreglers verbunden ist und deren anderes Anschlußendenpaar an die Wicklungsenden des Sparübertragers (US) oder an Anzapfungen des Sparübertragers (ÜS) angeschlossen sind, die symmetrisch zum Wicklungsmittelpunkt liegen, wobei dem Pulsbreitenmodulator (PBM) dieses modifizierten Boostreglers zur Bildung eines Vergleichssignals einerseits ein Fehlersignal ($U_{KO}$), welches von der Ausgangsspannung ($U_A$) abgeleitet ist und andererseits die Summe folgender Signale zugeführt wird:
   Ein sägezahnförmiges Signal ($U_{SK}$) konstanter Amplitude, ein zum Strom ($I_o$) durch das Stellglied (S2, S3) proportionales Signal, ein weiteres sägezahnförmiges Signal ($U_{SV}$), dessen Spitzen-Amplitude proportional zur aufintegrierten Eingangsspannung ($U_E$) gewählt wird und ein zusätzliches Gleichspannungssignal ($U_W$), das proportional zur Höhe der Eingangsspannung ($U_E$) ist, wobei der Vergleich derart vorgenommen wird, daß der arithmetische Mittelwert des Stromes durch die Induktivität des Schaltreglers konstant bleibt.

3. Verfahren nach Anspruch 1 oder 2 dadurch gekennzeichnet, daß die beiden sägezahnförmigen Signale am Verbindungspunkt der Einzelelemente eines RC-Seriengliedes (R2, C2) abgegriffen werden, welches parallel zur Eingangsspannungsquelle (QE) geschaltet ist, und bei welchem der Kondensator (C2) über einen Widerstand (R3) mit einer Referenzgleichspannung (Q2) beaufschlagt ist.

4. Verfahren nach Anspruch 2, dadurch gekennzeichnet, daß der Proportionalitätsfaktor (K) zwischen der

6

Amplitude des Gleichspannungssignals ($U_W$) und der Eingangsspannung (UE) zu

$$K = \frac{T\,(1 + \ddot{u}) \cdot R_M}{2 \cdot L \cdot \ddot{u}}$$

und die Maximal-Amplitude des Sägezahnsignals zu

$$\hat{U}_{SK} = \frac{T \cdot R_M\,U_A}{2L \cdot \ddot{u}}$$

gewählt wird, wobei

$U_A$ die Ausgangsspannung,

ü das Übersetzungsverhältnis des Sparübertragers,

L die Induktivität der Drossel,

T die Periodendauer der Schaltfrequenz,

$R_M$ ein fiktiver Widerstand, der multipliziert mit dem Drosselstrom ($I_{L(t)}$) die stromanteilige Spannung am Pulsbreitenmodulator (PWM) des Schaltreglers, ist.

## Claims

1. A method of operating a switching regulator whose actuator (S1) is controlled via a pulse width modulator (PBM), said pulse width modulator, in order to form a comparison signal, receives, on the one hand, an error signal ($U_{KO}$) that is derived from the output voltage ($U_A$) and, on the other hand, the sum of the following signals:

   a sawtooth signal ($U_{SK}$) of a constant amplitude, a signal proportional to the current ($I_O$) through the actuator (S1), a further sawtooth signal ($U_{SV}$) whose peak amplitude is selected to be proportional to the integrated input voltage ($U_E$), with the comparison being made in such a way that the arithmetic mean of the current through the inductance of the switching regulator remains constant.

2. A method of operating a switching regulator configured as a modified boost mode regulator which includes an autotransformer (ÜS) having symmetrical windings, with the center of the windings of said autotransformer being brought to one pole of an input direct voltage source ($Q_E$) and the ends of the windings each being connected by way of a diode (D2, D3) polarised in the same direction with one connecting end of a choke (Dr1), with the other end of said choke being connected to an output terminal of the switching regulator and two push-pull switches (S2, S3) are provided as switch actuator whose one pair of terminals is connected with the other pole of the input direct voltage source ($Q_E$) as well as with the switching regulator output terminal remote from the choke and whose other pair of terminals is connected with the winding ends of the autotransformer (ÜS) or with taps of the autotransformer (ÜS) that are symmetrical to the center of the windings, with the pulse width modulator (PBM) of this modified boost mode regulator receiving, in order to form a comparison signal, on the one hand, an error signal ($U_{KO}$) derived from the output voltage ($U_A$) and, on the other hand, the sum of the following signals:

   a sawtooth signal ($U_{SK}$) of a constant amplitude, a signal proportional to the current ($I_0$) through the switch actuator (S2, S3), a further sawtooth signal ($U_{SV}$) whose peak amplitude is selected to be proportional to the integrated input voltage ($U_E$) and an additional direct voltage signal ($U_W$) which is proportional to the magnitude of the input voltage ($U_E$), with the comparison being made in such a manner that the arithmetic mean of the current through the inductance of the switching regulator remains constant.

3. A method according to claim 1 or 2, characterised in that the two sawtooth signals are obtained at the connecting point of the individual elements of an internally series connected RC circuit (R2, C2) that is connected in parallel with the input voltage source ($Q_E$) and in which the capacitor (C2) is charged, via a resistor (R3), with a reference direct voltage ($Q_2$).

4. A method according to claim 2, characterised in that the proportionality factor (K) between the amplitude of the direct voltage signal ($U_W$) and the input voltage ($U_E$) is selected to be

$$K = \frac{T\,(1 + \ddot{u}) \cdot R_M}{2 \cdot L \cdot \ddot{u}}$$

and the maximum amplitude of the sawtooth signal is selected to be

$$\hat{U}_{SK} = \frac{T \cdot R_M\,U_A}{2L \cdot \ddot{u}}$$

where

$U_A$ is the output voltage,

ü is the transformation ratio of the autotransformer,

L is the inductance of the choke,

T is the period duration of the switching frequency,

$R_M$ is a fictitious resistance which, multiplied by the choke current ($I_{L(t)}$), is the current component voltage across the pulse width modulator (PWM) of the switching regulator.

## Revendications

1. Procédé d'exploitation d'un régulateur d'alimentation à commutation, dont l'organe réglant (S1) est commandé par l'intermédiaire d'un modulateur de la largeur d'impulsion (PMB), étant précisé qu'à ce modulateur de la largeur d'impulsion on amène, pour former un signal de comparaison, d'une part un signal d'erreur ($U_{KO}$) qui dérive de la tension de sortie ($U_A$), et d'autre part la somme des signaux suivants:

   Un signal en forme de dents de scie ($US_K$), d'amplitude constante, un signal proportionnel à l'intensité ($I_O$) passant dans l'organe réglant (S1), un autre signal en forme de dents de scie ($U_{SV}$) dont on choisit l'amplitude de pointe proportionnelle à la tension d'entrée intégrée ($I_O$), étant précisé que l'on procède à la comparaison de façon telle que la moyenne arithmétique de l'intensité qui passe dans l'inductance du régulateur d'alimentation à commutation reste constante.

2. Procédé d'exploitation d'un régulateur d'alimentation à commutation conçu sous forme d'un régulateur booster modifié, qui présente un auto-transformateur (üS) à bobinage symétrique, étant précisé que le point médian du bobinage de cet auto-transformateur est relié à un pôle d'une source ($Q_E$) de tension continue d'entrée et que les extrémités du bobinage sont reliées à une extrémité de bornage d'une self (Dr1) par l'intermédiaire chaque fois d'une diode à même sens de polarité (D2, D3), étant précisé que l'autre extrémité de cette self est reliée à une borne de sortie du régulateur d'alimentation à commutation et que sont prévus comme organes réglants deux commutateurs (S2, S3) travaillant en push-pull, dont une paire des extrémités de bornage est reliée aussi bien avec d'autres pôles de la source ($Q_E$) de la tension continue d'entrée qu'avec la borne de sortie, opposée à la self, du régulateur d'alimentation à commutation, et dont l'autre paire d'extrémités de bornage est reliée aux extrémités des bobinages de l'autotransformateur (üS) ou à des prises de l'auto-transformateur (US) qui sont situées symétriquement par rapport au point médian du bobinage, étant précisé qu'au modulateur de la largeur d'impulsion (PBM) de ce régulateur booster modifié, on amène, pour former un signal de comparaison, d'une part un signal d'erreur ($U_{KO}$) qui dérive de la tension de sortie ($U_A$) et d'autre part la somme des signaux suivants:

   Un signal en forme de dents de scie ($U_{SK}$), d'amplitude constante, un signal proportionnel à l'intensité ($I_O$) passant dans l'organe réglant (S2, S3), un autre signal en forme de dents de scie ($U_{SV}$) dont on choisit l'amplitude de pointe proportionnelle à la tension d'entrée intégrée ($I_O$), ainsi qu'un signal de tension continue complémentaire ($U_W$) qui est proportionnel à la valeur de la tension d'entrée ($U_E$), étant précisé que l'on procède à la comparaison de façon telle que la moyenne arithmétique de l'intensité qui passe dans l'inductance du régulateur d'alimentation à commutation reste constante.

3. Procédé selon la revendication 1 ou 2, caractérisé par le fait que l'on prélève les deux signaux en forme de dents de scie au point de liaison des différents éléments d'un organe de série RC (R2, C2) qui est monté en parallèle à la source ($Q_E$) de la tension d'entrée et dans le cas duquel une tension continue de référence ($Q_2$) a agit sur le condensateur (C2) par l'intermédiaire d'une résistance (R3).

4. Procédé selon la revendication 2, caractérisé par le fait que l'on choisit pour valeur du facteur de proportionnalité (K) entre l'amplitude ($U_W$) du signal de tension continue et la tension d'entrée ($U_E$):

$$K = \frac{T\,(I + \ddot{u}) \cdot R_M}{2 \cdot L \cdot \ddot{u}}$$

et pour valeur de l'amplitude maximale du signal en dents de scie:

$$\hat{U}_{SK} = \frac{T \cdot R_M\,U_A}{2L \cdot \ddot{u}}$$

avec

$U_A$ tension de sortie,

u rapport de transformation de l'auto-transformateur,

L inductance de la self,

T période de la fréquence de commutation,

$R_M$ résistance fictive qui, multipliée par l'intensité de la self ($I_{L(t)}$) donne la tension proportionnelle à l'intensité aux bornes du modulateur de la largeur d'impulsion (PWM) du régulateur d'alimentation à commutation.

FIG.1

EP 0 355 333 B1

FIG. 2

$U_{SV} \sim \int_0^t U_E(t) \, dt$

$U_{SK} = \hat{U}_{SK} \cdot \dfrac{t}{T}$

$U_W \sim U_E$

$I_{L}(t) \cdot R_M$

EP 0 355 333 B1

# FIG. 3

Fig. 4